# EUROPÄISCHE PATENTSCHRIFT

(11) **EP 0 917 755 B1**
(45) Veröffentlichungstag und Bekanntmachung des Hinweises auf die Patenterteilung: **07.11.2001**
(21) Anmeldenummer: 97929125.9
(22) Anmeldetag: 20.06.1997
(51) Int. Cl.: H02K 13/10

(54) **KOMMUTIERUNGSVORRICHTUNG FÜR GLEICHSTROMMOTOR**
DIRECT CURRENT MOTOR COMMUTATION DEVICE
DISPOSITIF DE COMMUTATION POUR MOTEUR A COURANT CONTINU

(30) Priorität: 07.08.1996 DE 19631828
(43) Veröffentlichungstag der Anmeldung: 26.05.1999
(73) Patentinhaber: ROBERT BOSCH GMBH, 70442 Stuttgart (DE)
(72) Erfinder: ECKSTEIN, Dietrich, D-77876 Kappelrodeck (DE); BERTSCH, Hans, D-77839 Lichtenau (DE)
(86) Internationale Anmeldenummer: DE9701270
(87) Internationale Veröffentlichungsnummer: WO9806163

(56) Entgegenhaltungen:
- DE-C- 417 833
- DE-C- 581 451
- FR-A- 2 515 439
- GB-A- 2 256 753
- US-A- 5 049 772

## Beschreibung

### Stand der Technik

Die Erfindung geht aus von einer Kommutierungsvorrichtung eines Gleichstrommotors, bestehend u.a. aus Kollektorlamellen und Bürsten, nach dem Oberbegriff des Hauptanspruchs, bei dem die Welligkeit des Stromes mit Hilfe einer elektronischen Schaltung erfaßbar ist und als Maß für die Drehzahl bzw. die Anzahl der Motorumdrehungen auswertbar ist.

Es ist allgemein bekannt, den Wechselanteil des Stromes ("Welligkeit") von Gleichstrommotoren als Maß für die Drehzahl des Motors zu erfassen, auszuwerten und auszunutzen. Ein Verfahren hierbei ist das sog. Ripple-Count-Verfahren. Hierbei verläuft das analoge Signal des Kommutierungsstromes wegen ungleicher Teilspulen am Anker des Motors aufgrund von Fertigungstoleranzen mit einer niederfrequenten Modulation, zusätzlich zur höherfrequenten Welligkeit. Es ergeben sich dabei lokale Minima und Maxima, bei denen Minima absolut höhere Werte als Maxima aufweisen können. Daher ist eine lokale Erfassung mittels eines aufwendigen, differenzierenden Verfahrens erforderlich.

Es ist ein Verfahren und eine Anordnung bekannt (DE-A-44 22 083), mit deren Hilfe die Auswertung des analogen Signals des Kommutierungsstromes mit geringem Aufwand schaltungstechnischer und kostenmäßiger Art teilweise gelöst wird.

Da die Gestalt der Bürstenlauffläche jedoch einen erheblichen Einfluß auf das analoge Signal des Kommutierungsstromes hat, führt insbesondere ein leichter geometrischer Versatz der zusammenarbeitenden Bürsten zu zusätzlichen Stromripples im Signalverlauf des Kommutierungsstromes und damit zu unerwünschten Falschsignalen.

Ein Lösungsansatz zur Vermeidung von Falschsignalen wird durch eine bekannte Anordnung zur Verbesserung des analogen Signals des Kommutierungsstromes gegeben (DE-A-31 48 966). Dort ist ausgeführt, daß das verbesserte analoge Signal sich durch eine abgewandelte Form der Bürstenlauffläche ergibt, die zwei im wesentlichen punkt- bzw. linienförmige Kontaktflächen zum Kommutator aufweist und so zu einer besseren zeitlichen und geometrischen Überdeckung und zu einer längeren Kommutierungszeit führt.

Ein Nachteil dieser Anordnungen liegt in dem lauten Bürstengeräusch, das dadurch entsteht, daß die Kollektorlamellen schlagartig unter die Bürste laufen. Das Bürstengeräusch wird in an sich bekannter Weise definiert, als der dabei entstehende Luftschall, der mit einem Mikrophon gemessen werden kann. Bei der abgewandelten Form der Bürstenlauffläche nach DE-A-31 48 966 laufen die Kollektorlamellen sogar jeweils zweimal pro Bürste unter die Bürstenlauffläche. Die Geräuschentwicklung ist hierbei noch stärker.

US-A-5 049 772 und DE-A-417 833 beschreiben eine Einrichtung zur Verhinderung von Bürsten feur und elektrischen verlusten sowie zur Eliminierung von Geräuschen.

### Vorteile der Erfindung

Ein besserer Lösungsansatz wird mit der erfindungsgemäßen Gestaltung der Kommutierungsvorrichtung mit den kennzeichnenden Merkmalen des Hauptanspruchs gegeben.

Mit dieser Erfindung wird die Gewinnung eindeutiger und fehlerfreier Drehzahlinformationen aus der Welligkeit des Kommutierungsstromes beim mechanisch kommutierten Gleichstrommotor ermöglicht, die zur Drehzahl-, Winkel- und Wegerkennung auswertbar sind, unter vorzugsweiser Verwendung von herkömmlich gestalteten Bürstenlaufflächen, die eine Kontaktfläche zum Kommutator aufweisen.

Als wesentlicher Vorteil der erfindungsgemäßen Gestaltung der Kommutierungsvorrichtung nach dem Hauptanspruch ist anzusehen, daß der Kommutierungsvorgang zeitlich länger andauert, weil jeweils zwei benachbarte Kollektorlamellen von der Kontaktfläche der Bürste mit dem Kommutator über einen größeren Drehwinkelbereich des Ankers des Gleichstrommotors kurzgeschlossen werden.

Dadurch wird vermieden, daß bei geometrischem Versatz der Bürsten zusätzliche Stromripples im Signalverlauf des Kommutierungsstromes entstehen, die durch die Auswerteelektronik fälschlicherweise als separate Impulse erkannt und gezählt werden.

Desweiteren wird durch die längere Kommutierungszeit die Geräuschentwicklung des Motors geringer, weil die Momentenwelligkeit innerhalb einer Ankerumdrehung kleiner und die elektromagnetische Anregung des Motorgehäuses geringer wird. Diese Geräuschentwicklung entspricht dem sogenannten Körperschall, der in Form von Vibrationen gemessen wird.

Ein weiterer Vorteil dieser Lösung besteht in dem deutlich verringerten Bürstengeräusch. Aufgrund der erfinderischen Gestaltung der Kommutierungsvorrichtung laufen die Kollektorlamellen nicht schlagartig (zu einem Zeitpunkt) unter die Bürste sondern allmählich bzw. kontinuierlich.

Beispielsweise wird bei der Gestaltung der Bürstenlauffläche nach Anmeldung DE-A-31 48 966, in der die Bürste zwei Kontaktflächen zum Kommutator aufweist und deshalb jede Kollektorlamelle zweimal pro Bürste unter eine Kontaktfläche läuft, das Bürstengeräusch durch die erfinderische Gestaltung der Kommutierungsvorrichtung deutlich verbessert und die Lärmbelastung verringert werden.

Durch die in den Unteransprüchen aufgeführten Maßnahmen ergeben sich vorteilhafte Weiterbildungen und Verbesserungen der im Hauptanspruch angegebenen Merkmale. Besonders vorteilhaft ist die Möglichkeit, markttypische Bürsten verwenden zu können, da die Bürsten dem Verschleiß unterliegen und somit häufiger ausgetauscht werden müssen. Dies wirkt sich kostenreduzierend aus.

### Zeichnung

Ausführungsbeispiele der Erfindung sind in der Zeichnung dargestellt und in der nachfolgenden Beschreibung näher erläutert. Es zeigen:
Figur 1 schematisch die Kommutierungsvorrichtung eines Gleichstrommotors mit einer beispielhaften Ausführung der Kollektorlamellen und der Bürste,
Figur 2 schematisch die Kommutierungsvorrichtung eines Gleichstrommotors mit einer weiteren beispielhaften Ausführung der Kollektorlamellen,
Figur 3 schematisch die Kommutierungsvorrichtung eines Gleichstrommotors mit einer dritten beispielhaften Ausführung der Kollektorlamellen und der Bürsten,
Figur 4 ein Diagramm analoger Signale des Kommutierungsstromes mit Stromripples und daraus gewonnener digitaler Signale an einer bekannten Kommutierungsvorrichtung, und
Figur 5 ein Diagramm, ähnlich dem in Figur 4, jedoch generiert mit Hilfe von der erfindungsgemäß gestalteten Kommutierungsvorrichtung nach Figur 1.

### Beschreibung des Ausführungsbeispiels

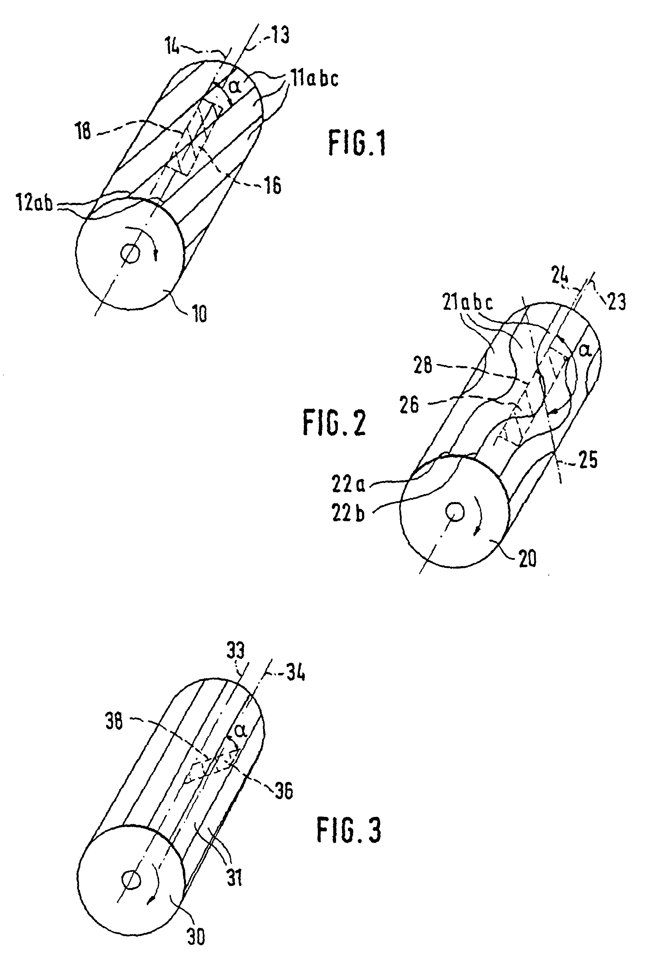

Figur 1 zeigt schematisch in raumbildlicher Darstellung einen Kommutator 10 eines Gleichstrommotors, aufgebaut aus am Umfang nebeneinander angeordneten Kollektorlamellen 11 und dazwischen liegenden Isolierlamellen 12. Der Kommutator 10 dreht sich in Pfeilrichtung um eine Achse 13, parallel zu dieser Achse 13 liegt eine gedachte Gerade 14 in der zylindrischen Oberfläche des Kommutators 10. Diese gedachte achsparallele Gerade 14 überdeckt sich mit einer vorderen Längskante 18 einer Kontaktfläche 16 einer Bürste mit dem Kommutator 10. Die Längskante 18 schließt mit jeder der Längskanten der Kollektorlamellen 11 einem Winkel α von z. B. zehn Grad ein. Schematisch auf der Oberfläche des Kommutators 10 ist die Kontaktfläche 16 der Bürste eingezeichnet, die mit einer entsprechenden gegenüberliegenden, nicht erkennbaren zweiten Bürste zusammenwirkt. Der Kommutator 10 ist rotationssymmetrisch zu der Achse 13.

Im Betrieb des Gleichstrommotors dreht sich der Kommutator 10 unter der Kontaktfläche 16 hinweg. Die Kollektorlamelle 11b wird durch die Kontaktfläche 16 mit der ihr benachbarten Kollektorlamelle 11c kurzgeschlossen. Nach der Kommutierungszeit hat sich der Kommutator 10 soviel unter der Kontaktfläche 16 der Bürste weitergedreht, daß die Kollektorlamelle 11b nicht mehr mit der ihr benachbarten Kollektorlamelle 11c kurzgeschlossen ist, sondern mit der nächsten benachbarten Kollektorlamelle 11a.

Figur 2 zeigt schematisch in raumbildlicher Ansicht einen Kommutator 20, aufgebaut aus den Kollektorlamellen 21a, b, c..., die im mittleren Bereich eine Auswölbung in Umfangsrichtung aufweisen und die gegeneinander durch die Isolierlamellen 22a, b,... isoliert sind. Der Kommutator 20 dreht sich in Pfeilrichtung um seine Achse 23. In der Kommutatoroberfläche liegt eine gedachte, beliebige achsparallele Gerade 24, die sich wieder mit der vorderen Längskante 28 einer Kontaktfläche 26 überdeckt. Diese Längskante 28 schließt mit einer Tangente 25 der Auswölbung an der Kollektorlamelle 21 am Schnittpunkt der vorderen Längskante 28 mit der Längskante der Kollektorlamelle 21 den Winkel α von ca. hundertzwanzig Grad ein. Die Kollektorlamellen 21 können auch Ω-förmig in der Kommutatoroberfläche in Umlaufrichtung ausgewölbt sein, wobei dann der Winkel α im Betrag zwischen null und hundertachtzig Grad variieren kann.

Figur 3 zeigt schematisch in raumbildlicher Ansicht einen Kommutator 30, der aus achsparallelen Kollektorlamellen 31 aufgebaut ist. Der Kommutator 30 dreht sich in Pfeilrichtung um eine Achse 33 unter einer Kontaktfläche 36 einer Bürste hinweg, deren vordere Längskante 38 in dem Winkel α von zehn Grad zur Kollektorlamelle 32 steht, deren Längskante sich mit der achsparallelen Geraden 34 überdeckt.

Der Winkel α, die Breite der Kollektorlamellen 11, 21, 31 und die Gestalt der Kontaktfläche 16, 26, 36 müssen in jedem Ausführungsbeispiel so aufeinander abgestimmt werden, daß ständig mindestens zwei Kollektorlamellen 11, 21, 31 kurzgeschlossen werden.

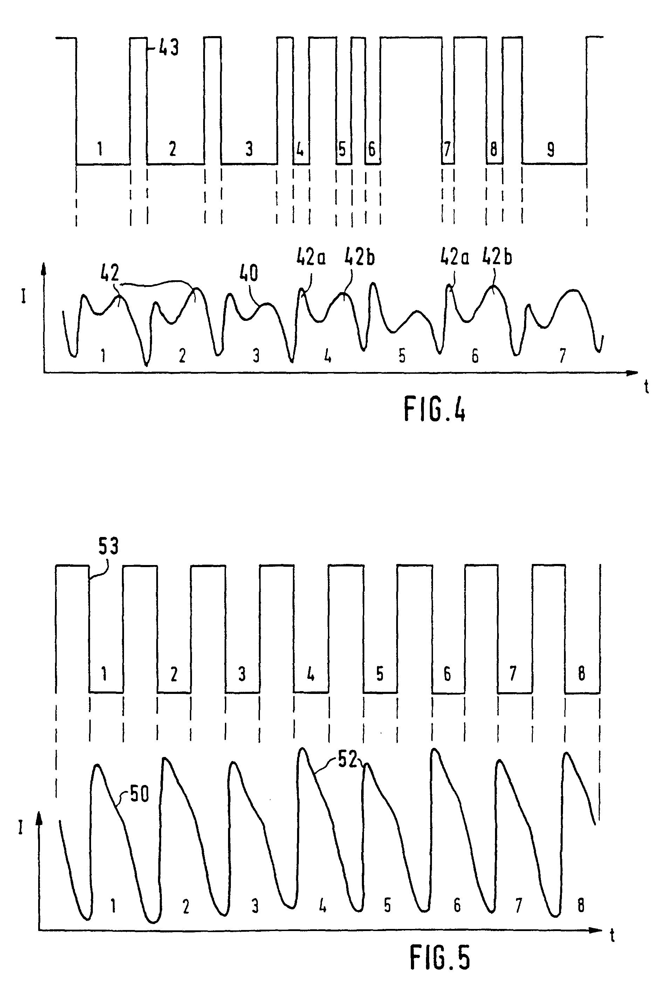

Die untere Kurve in Figur 4 zeigt das analoge Signal des Kommutierungsstromes 40 eines Gleichstrommotors mit herkömmlicher Kommutierungsvorrichtung (Kollektorlamellen und vordere Längskante der Kontaktflächen der Bürsten sind achsparallel) aufgetragen über die Zeitachse t. Zu sehen sind im Stromverlauf 40 sieben Impulse 42, wobei jeder Impuls 42 zwei Ripples 42a und b aufweist. Im oberen Teil des Diagramms ist der digitale Signalverlauf 43 dargestellt, der durch eine an sich bekannte Auswerteelektronik aus dem analogen Signal des Kommutierungsstromes erhalten wurde. Zu erkennen ist hierbei, daß die Auswerteelektronik fälschlicherweise neun Impulse statt der erforderlichen sieben erfaßt hat.

In Figur 5 ist das analoge Signal des Kommutierungsstromes 50 und das daraus gewonnene digitale Signal 53 eines mechanisch kommutierten Gleichstrommotors unter Verwendung der erfindungsgemäß gestalteten Kommutierungsvorrichtung nach dem ersten Ausführungsbeispiel nach Figur 1 dargestellt. Die untere Kurve entspricht dem analogen Signalverlauf des Kommutierungsstromes 50 über einen Zeitbereich, der acht Impulsen 52 entspricht. Die Ripples sind bei diesem Signalverlauf nicht mehr zu erkennen. Dementsprechend zuverlässig kann die Auswerteelektronik auch die analogen Impulse 52 erfassen und in entsprechende digitale Impulse umsetzen, acht an der Zahl.

Zu bemerken ist, daß die Bürsten derart gestaltet sein können, daß sie anstelle einer im wesentlichen rechteckigen oder linienförmigen Kontaktfläche 16, 26, 36 zwei im wesentlichen kreis- oder punktförmige Kontaktflächen aufweisen. In diesem Fall entspricht die für den Winkel α maßgebende vordere Längskante 18, 28, 38 der Kontaktfläche der vorderen Längskante einer Verbindungsfläche, die die zwei im wesentlichen kreis- bzw. punktförmigen Kontaktflächen miteinander verbindet.

Alternative Ausführungen der Längskanten der Kollektorlamellen 11, 21 oder der Kontaktfläche 36 sind eckige oder gebogene Formen, insbesondere Kreissegmente, oder geschwungene Formen.

Kommutatoren 10, 20, die mit den nach Figur 1 und 2 gestalteten Kollektorlamellen 11, 21 ausgestattet sind, könnten auch mit den gemäß z. B. DE-A-31 48 966 ausgeführten Bürsten betrieben werden.

Den genannten Ausführungsbeispielen ist gemeinsam, daß sich bei geeigneter Dimensionierung der Kollektorlamellen 11, 21, 31, der Kontaktfläche 16, 26, 36 und des Winkels α die gleichen Kommutierungszeiten und daraus abgeleiteten Vorteile erzielen lassen.

## Patentansprüche

1. Kommutierungsvorrichtung eines Gleichstrommotors, insbesondere eines mechanisch kommutierten Gleichstrommotors, mit einem Kollektorlamellen (11, 21, 31) aufweisenden Kommutator (10, 20, 30) und mit Bürsten, wobei die Bürsten mit dem Kommutator (10, 20, 30) jeweils eine Kontaktfläche (16, 26, 36) haben und wobei die Welligkeit des Stromes (40, 50), die bei der Kommutierung des Motorstromes entsteht, mit Hilfe einer elektronischen Schaltung **erfaßt** und die Frequenz der Welligkeit als ein Maß für die Drehzahl **ausgewertet** ist, **dadurch gekennzeichnet, daß zur Gewinnung eindeutiger und fehlerfreier Drehzahlinformationen** die Längskante der Kollektorlamellen (11, 21, 31) und die vordere Längskante (18, 28, 38) der Kontaktfläche (16, 26, 36) jeweils mindestens einer der Bürsten zusammen einen Winkel (α) größer null Grad einschließen, so daß mindestens zwei benachbarte Kollektorlamellen (11, 21, 31) **ständig über die Bürste kurzgeschlossen** sind.

2. Kommutierungsvorrichtung nach Anspruch 1, **dadurch gekennzeichnet, daß** die Längskanten der Kollektorlamellen (11, 21, 31) und/oder die vordere Längskante (18, 28, 38) der Kontaktfläche (16, 26, 36) einen Winkel zu einer gedachten achsparallelen Geraden (14, 24, 34) in der Kommutatoroberfläche bilden, und daß durch die Kontaktfläche (16, 26, 36) mindestens zwei Kollektorlamellen ständig kurzgeschlossen sind.

3. Kommutierungsvorrichtung nach Anspruch 2, **dadurch gekennzeichnet, daß** die vordere Längskante (18) der Kontaktfläche (16) parallel zur gedachten achsparallelen Geraden (14) in der Kommutatoroberfläche liegt und die Längskanten der Kollektorlamellen (11) in einem konstanten Winkel (α) vom Betrag größer null Grad und kleiner fünfundvierzig Grad zu der gedachten achsparallelen Geraden (14) liegen, vorzugsweise in einem Winkel (α) gleich zehn Grad.

4. Kommutierungsvorrichtung nach Anspruch 2, **dadurch gekennzeichnet, daß** die vordere Längskante (28) der Kontaktfläche (26) parallel zur gedachten achsparallelen Geraden (24) liegt und die Längskanten der Kollektorlamellen (21) bereichsweise in der Kommutatoroberfläche in Umfangsrichtung ausgewölbt sind, wobei der Betrag des Winkels (α) im Bereich der Auswölbung zwischen der Tangente (25) an den Kollektorlamellen (21) und der Längskante (28) der Kontaktfläche (26) größer null und kleiner hundertachtzig Grad ist.

5. Kommutierungsvorrichtung nach Anspruch 2, **dadurch gekennzeichnet, daß** die Längskanten der Kollektorlamellen (31) parallel zu einer gedachten achsparallelen Geraden (34) liegen und daß die vordere Längskante (38) der Kontaktfläche (36) jeweils einer der Bürsten mit dem Kommutator (30) in einem konstanten Winkel (α) vom Betrag größer null Grad und kleiner fünfundvierzig Grad zu der gedachten achsparallelen Geraden (14) liegt, vorzugsweise in einem Winkel (α) gleich zehn Grad.

## Claims

1. Commutation apparatus of a DC motor, in particular of a mechanically commutated DC motor, having a commutator (10, 20, 30) exhibiting commutator bars (11, 21, 31), and having brushes, the brushes having a contact surface (16, 26, 36) with the commutator (10, 20, 30) in each case, and the ripple of the current (40, 50) which arises during the commutation of the motor current being detected with the aid of an electronic circuit, and the frequency of the ripple being evaluated as a measure of the speed, **characterized in that**, in order to obtain unambiguous and error-free speed information, the longitudinal edge of the commutator bars (11, 21, 31) and the front longitudinal edge (18, 28, 38) of the contact surface (16, 26, 36) of in each case at least one of the brushes together enclose an angle (α) of greater than zero degrees, such that at least two neighbouring commutator bars (11, 21, 31) are permanently short-circuited via the brushes.

2. Commutation apparatus according to Claim 1, **characterized in that** the longitudinal edges of the commutator bars (11, 21, 31) and/or the front longitudinal edge (18, 28, 38) of the contact surface (16, 26, 36) form an angle relative to an imaginary axially parallel straight line (14, 24, 34) in the commutator surface, and **in that** at least two commutator bars are permanently short-circuited by the contact surface (16, 26, 36).

3. Commutation apparatus according to Claim 2, **characterized in that** the front longitudinal edge (18) of the contact surface (16) is situated parallel to the imaginary axially parallel straight line (14) in the commutator surface, and the longitudinal edges of the commutator bars (11) are situated at a constant angle (α) with an absolute value of greater than zero degrees and less than forty-five degrees relative to the imaginary axially parallel straight line (14), preferably at an angle (α) equal to ten degrees.

4. Commutation apparatus according to Claim 2, **characterized in that** the front longitudinal edge (28) of the contact surface (26) is situated parallel to the imaginary axially parallel straight line (24), and the longitudinal edges of the commutator bars (21) are in some regions outwardly cambered in the circumferential direction in the commutator surface, the absolute value of the angle (α) in the region of the outward camber between the tangent (25) at the commutator bar (21) and the longitudinal edge (28) of the contact surface (26) being greater than zero and less than one hundred and eighty degrees.

5. Commutation apparatus according to Claim 2, **characterized in that** the longitudinal edges of the commutator bars (31) are situated parallel to an imaginary axially parallel straight line (31), and **in that** the front longitudinal edge (38) of the contact surface (36) of in each case one of the brushes is situated with the commutator (30) at a constant angle (α) with an absolute value of greater than zero degrees and less than forty-five degrees relative to the imaginary axially parallel straight line (14), preferably at an angle (α) equal to ten degrees.

## Revendications

1. Dispositif de commutation d'un moteur à courant continu, en particulier d'un moteur à commutation mécanique, comportant un collecteur (10, 20, 30) équipé de lamelles (11, 21, 31) et des balais appliqués sur le collecteur (10, 20, 30) chacun par une portée de contact (16, 26, 36), l'ondulation du courant (40, 50) qui se produit lors de la commutation étant saisie par un circuit électronique qui valorise la fréquence de l'ondulation en tant que mesure de la vitesse de rotation,
**caractérisé en ce que**
pour obtenir des informations de vitesse de rotation claires et sans erreurs, le bord longitudinal des lamelles de collecteur (11, 21, 31) et le bord longitudinal avant (18, 28, 38) de la portée de contact (16, 26, 36) d'au moins un des balais font entre eux un angle (α) supérieur à zéro degré, de sorte que constamment, au moins deux lamelles de collecteur (11, 21, 31) voisines sont en court-circuit par l'intermédiaire du balai.

2. Dispositif de commutation selon la revendication 1,
**caractérisé en ce que**
les bords longitudinaux des lamelles de collecteur (11, 21, 31) et/ou le bord longitudinal avant (18, 28, 38) de la portée de contact (16, 26, 36) font un angle avec une droite imaginaire (14, 24, 34) parallèle à l'axe et placée sur la surface externe du collecteur, la portée de contact (16, 26, 36) mettant en court-circuit au moins deux lamelles de collecteur, en permanence.

3. Dispositif de commutation selon la revendication 2,
**caractérisé en ce que**
le bord longitudinal avant (18) de la portée de contact (16) est parallèle à la droite imaginaire parallèle à l'axe (14) située sur la surface externe du collecteur, et les bords longitudinaux des lamelles de collecteur (11) font un angle constant (α) non nul mais inférieur à quarante cinq degrés avec la droite imaginaire (14), de préférence un angle (α) égal à dix degrés.

4. Dispositif de commutation selon la revendication 2,
**caractérisé en ce que**
le bord longitudinal avant (28) de la portée de contact (26) est parallèle à la droite imaginaire (24) parallèle à l'axe et située sur la surface externe du collecteur et les bords longitudinaux des lamelles de collecteur (21) présentent localement un tracé courbé en direction périphérique, l'angle (α) existant dans la zone courbée entre la tangente (25) à la lamelle de collecteur (21) et le bord longitudinal (28) de la portée de contact (26) étant supérieur à zéro et inférieur à cent quatre vingt degrés.

5. Dispositif de commutation selon la revendication 2,
**caractérisé en ce que**
les bords longitudinaux des lamelles de collecteur (31) sont parallèles à une droite imaginaire (34) parallèle à l'axe et le bord longitudinal avant (38) de la portée de contact (36) de chaque balai sur le collecteur (30) fait un angle constant (α) supérieur à zéro et inférieur à quarante cinq degrés avec la droite imaginaire (14), parallèle à l'axe, un angle (α) étant de préférence égal à dix degrés.
